# EUROPEAN PATENT APPLICATION

(11) **EP 2 929 941 A1**
(43) Date of publication of application: **14.10.2015**
(21) Application number: 14166242.9
(22) Date of filing: 28.04.2014
(51) Int. Cl.: B03C 1/00, B29B 17/02

(54) **Magnetic plastic or fiberboard waste separation**

(30) Priority: 08.04.2014 US 201414248128
(71) Applicant: State of Oregon acting by and through The State Board of Higher Education on Behalf of the University of Oregon, Eugene, OR 97403-1238 (US)
(72) Inventor: Chartoff, Richard, Eugene, OR 97403-1238 (US); Check, Casey, Eugene, OR 97403-1238 (US)
(74) Representative: HGF Limited

(57) **Abstract**

A method comprising:
applying a magnetic nanoparticle/polymer suspension to at least a portion of a surface of plastic pieces, or to at least a portion of a surface of fiberboard pieces, in a mixed solid waste stream; and

subjecting the magnetic nanoparticle/polymer suspension-coated plastic or fiberboard pieces to a magnetic field to separate the magnetic nanoparticle/polymer suspension-coated plastic or fiberboard pieces from the mixed solid waste stream.

A composition comprising magnetic nanoparticles dispersed in a film-forming polymer solution, wherein the magnetic nanoparticles having an average particle size of 2 to 100 nm, the magnetic nanoparticles are surface modified with a dispersion enhancing agent and the composition is sprayable.

## Description

### BACKGROUND

Separating plastics and paper from mixed solid waste streams continues to be problematic. A more efficient method and system is desirable.

### SUMMARY

Disclosed herein are methods comprising:
applying a magnetic nanoparticle/polymer suspension to at least a portion of a surface of plastic pieces, or to at least a portion of a surface of fiberboard pieces, in a mixed solid waste stream; and
subjecting the magnetic nanoparticle/polymer suspension-coated plastic pieces or fiberboard pieces to a magnetic field to separate the magnetic nanoparticle/polymer suspension-coated plastic pieces or fiberboard pieces from the mixed solid waste stream.

Also disclosed herein are compositions comprising:
magnetic nanoparticles dispersed in a film-forming polymer solution, wherein the magnetic nanoparticles having an average particle size of 2 to 100 nm, the magnetic nanoparticles are surface modified with a dispersion enhancing agent, the composition has a shelf-life stability of at least 180 days, and the composition is sprayable.

The invention includes the subject matters of the claims.

The foregoing will become more apparent from the following detailed description, which proceeds with reference to the accompanying figures.

### BRIEF DESCRIPTION OF THE DRAWINGS

Figure 1 is a schematic depicting the preparation of magnetic Fe₃O₄ nanoparticles with an oleic acid ligand surface.
Figures 2(a) and 2(b) are Transmission Electron Microscope (TEM) images of magnetic Fe₃O₄ nanoparticles synthesized by the procedure of Example 1 and stabilized with oleic acid. Figure 2 a) shows a narrow particle size distribution and a lack of large aggregates. The halo visible around the particles is the oleic acid coating shell. Figure 2 b) shows a high resolution image of a group of nanoparticles with the atomic planes visible.
Figure 3 is a schematic depicting the preparation of magnetic Fe₃O₄ nanoparticles with 3-aminopropylsilane (APS) coating.
Figures 4(a) and 4(b) are TEM images of magnetic Fe₃O₄ nanoparticles coated with aminopropyl-trimethoxysilane. The particles obtained by this method show great regularity in size and crystallinity. Figure 4 a) shows a very narrow particle size distribution and a lack of aggregated particles. Figure 4 b) shows a high resolution image of a cluster of nanoparticles with the atomic planes visible. The particles are ∼7nm in size.
Figure 5. Thermogravimetric Analysis (TGA) plot of weight loss vs. temperature for Fe₃O₄-APS nanoparticles
Figure 6. Thermogravimetric Analysis (TGA) plot of weight loss vs. temperature for Fe₃O₄-APS/20wt% PVP magnetic ink composition.

### DETAILED DESCRIPTION

In certain embodiments, the methods and systems disclosed herein are directed to separating plastic or fiberboard from a mixed solid waste stream such as, for example, municipal and commercial solid waste. In certain embodiments, the methods and systems disclosed herein are directed to separating soft plastic pieces (e.g., plastic bags (e.g., polyethylene)) from non-soft plastic pieces in mixed solid waste streams. In particular, the methods and systems disclosed herein are directed to separating plastic bags (including segments or sections of plastic bags or films) from a mixture of plastic bags and paper. In certain embodiments, the methods and systems disclosed herein may be used to separate plastic from fiber recycling streams where the presence of plastic is a contaminant to the stream. In certain embodiments, the methods and systems disclosed herein may be used to separate fiberboard (e.g., paperboard) out of a waste or recycling stream (e.g., paperboard out of a mixed paperboard/newspaper stream).

A coating composition containing magnetic nanoparticles is applied (e.g., by spraying) to soft plastic and/or fiberboard pieces to tag the soft plastic and/or fiberboard pieces and separate the coated soft plastic and/or fiberboard pieces from the mixed solid waste streams by exposing the coated soft plastic and/or fiberboard pieces to a magnetic field. The magnetic field attracts the magnetic-coated soft plastic or fiberboard pieces, thus separating them from the waste stream. The nanoparticles can be suspended in a variety of solvents. Both solvent and water based liquid formulations have been demonstrated that, when deposited onto the surface of a 5 g bag, adhered sufficiently and were attracted by a small permanent magnet. In the process bags will be "tagged" with a spot of the magnetic "ink" as they are identified by an infrared detector. The coating composition should be fast drying and must contain sufficient nanoparticles so that the soft plastic pieces can be attracted by a magnetic field of sufficient strength. After collection, the coating may be dissolved and cleaned off prior to recycling or burning the plastic. The magnetic particles then can be recycled. The process is most effective for separating plastic from paper, particularly from a fiber or mixed waste stream.

In certain embodiments, the term "soft plastic" refers to plastic films and, such as low density polyethylene, expanded polystyrene, and extruded polystyrene foam. In addition, the term "soft plastic" can refer to the aforementioned materials with a bulk density of about 0.5-4 pounds per cubic foot and which are typically two-dimensional or flat in shape. The soft plastic pieces may be shredded or unshredded.

The term "hard plastic", also referred to as rigid plastic, means plastic materials including, but not limited to, low-density polyethylene, high-density polyethylene, polypropylene, polyethylene terephthalate, polystyrene, and polyvinyl chloride. In addition, the term "hard plastic" can refer to the aforementioned materials with a bulk density of about 2-7 pounds per cubic foot and actual material density of about 50-87 pounds per cubic foot. "Hard plastic" is also inclusive of foams. The hard plastic pieces may be shredded or unshredded.

In certain embodiments, the term "solid waste" refers to unwanted or discarded solid material with insufficient liquid content to be free flowing, including, but not limited to rubbish, garbage, scrap materials, junk, refuse, inert fill material, and landscape refuse. The fact that a solid waste, or constituent of the waste, may have value, be beneficially used, have other use, or be sold or exchanged, does not exclude it from being a solid waste. "Solid waste" is also inclusive of recycling streams.

The fiberboard pieces that can be separated may be shredded or unshredded pieces from any type of fiberboard substrate. In certain embodiment, the fiberboard may be paperboard such as, for instance, a corrugated paperboard (e.g, cardboard or boxboard). The corrugated paperboard may include an exterior liner and a corrugated member. In some implementations, the corrugated member consists of a series of parallel flutes. However, in other implementations, the corrugated member can include other configurations, such as a waffle-type pattern or honeycomb. The corrugated paperboard may be a single wall structure (i.e., includes a single fluted corrugated medium and at least one liner layer) or a multiwall structure (i.e., includes at least two fluted corrugated mediums and at least one liner layer). One or more paperboard substrates can form an article of manufacture such as a packaging container. Examples of packaging containers include cartons and boxes, such as cartons for holding beverages for sale at the retail level (for instance, a hand-carry carton that holds six, 12 or 24 or more bottles or cans of a beverage), meat and produce bulk bins, wet-packed containers, reusable containers, rubber and chemical bulk bins, heavy duty containers, bags, and envelopes.

In certain embodiments, the magnetic nanoparticle may be a particle possessing either a permanent or induced magnetic moment. The magnetic particles may be ferromagnetic, paramagnetic or superparamagnetic. In certain embodiments, the particles are superparamagnetic particles. Their superparamagnetic properties depend on their being dispersed and not aggregated. In a zero magnetic field superparamagnetic particles show no magnetization owing to fast rotation of their magnetic moments. In a constant magnetic field, all magnetic moments are aligned to the magnetic field lines of force and the particles are magnetized. The magnetic relaxation times are very short, so after the external magnetic field is removed demagnetization is almost instantaneous. The magnetic moments of the particles are strong so that they are attracted by modest magnetic fields.

The nanoparticles can be monodisperse (a single crystal of a magnetic material, e.g., metal oxide, such as superparamagnetic iron oxide, per nanoparticle) or polydisperse (a plurality of crystals, e.g., 2, 3, or 4, per nanoparticle). Monodisperse nanoparticles are preferred. The magnetic nanoparticles may have an average particle size of 2 to 100 nm, more particularly 5 to 50 nm, and most particularly 5 to 25 nm. In certain embodiments, the magnetic nanoparticles have an average particle size of less than 10 nm.

The shape of the magnetic nanoparticles may be uniform or irregular. For example, they may be octagonal, spherical, rod-shaped or acicular particles. Magnetic nanoparticles of substantially octagonal or spherical form are preferably used. Approximately spherical particles can be obtained, for example, by atomizing molten metals (atomized powders). It is also possible to use mixtures of magnetic particles, in particular of magnetic nanoparticles having different particle size distribution and/or comprising different materials. However, in certain embodiments, the magnetic nanoparticles as suspended in the liquid polymer medium have a narrow particle size distribution of, for instance, 5 to 50 nm, more particularly 5 to 25 nm.

The magnetic nanoparticles are made from materials having magnetic properties. Examples of magnetic materials include chromium (III), cobalt (II), copper (II), dysprosium (III), erbium (III), gadolinium (III), holmium (III), iron (III), iron (II), manganese (II), manganese (III), nickel (II), neodymium (III), praseodymium (III), samarium (III), terbium (III), ytterbium (III), and alloys or oxides thereof. When sufficiently small, nanoparticles of ferromagnetic material tend to become superparamagnetic (i.e., their magnetic domains cannot be permanently aligned in any particular direction). Illustrative nanoparticles may be iron-containing particles, nickel-containing particles, cobalt-containing particles, or a mixture or combination thereof. These are, for example, but not restricted to, particles of iron, iron alloys, iron oxides, iron nitrite, iron carbide, carbonyl iron, nickel, cobalt, magnesium, stainless steel, silicon steel, alloys or mixtures thereof. Preferably, the magnetic nanoparticles are Fe₂O₃ or Fe₃O₄, and most preferably superparamagnetic Fe₃O₄.

In certain embodiments, the magnetic nanoparticles are treated to improve dispersion of the nanoparticles in the liquid medium. For example, the nanoparticles may be modified with a surface coating agent to enhance uniform dispersion and avoid nanoparticle aggregation. In certain embodiments, the surface coating provides a nanoparticle surface that is functionalized with groups or ligands such as hydroxyl, alkyl, alkenyl, silyl, siloxy, amino, or a mixture or combination thereof. Illustrative surface modifying agents include a saturated or unsaturated carboxylic acid (e.g., fatty acids such as oleic acid); a silane (e.g., an organosilane such as alkylsilane, haloalkylsilane, alkoxy silane, amino alkyl silane, amino alkoxy silane, aminoalkyl alkoxy silane); and a siloxane. Illustrative organosilanes include mono-, di-, tri-C₁-C₂₀-alkylsilanes, C₁-C₂₀-alkoxysilanes, C₁-C₂₀-trialkoxy-C₃-C₁₈-alkylsilanes, aminoalkylsilanes, ester-containing silanes or polyalkoxysilanes. Illustrative alkoxy silanes includes trialkoxy silanes such as trimethoxy silane or triethoxy silane. Illustrative aminoalkyl alkoxy silanes include aminoalkyl trialkoxy silanes such as 3-aminopropyltriethoxy silane.

The amount of surface modifying agent applied to the nanoparticles may vary. In certain embodiments, the amount of surface modifying agent may be 2% to 40%, more particularly 2% to 20%, and most particularly 2 to 7%, by weight.

An advantage of using a silane coating is the formation of a much more robust and stable coating. A second benefit from the use of a silane coating agent is a greatly reduced quantity of organic material on the nanoparticle surface, leading to a greater percentage of inorganic nanoparticle mass. The stability of the silane coating leads to particles which are much more resistant to aggregation and can be easily recovered and reused without aggregation and loss of magnetic properties. Particles synthesized with a silane coating agent may remain indefinitely dispersed in liquid medium such as methanol and ethanol in the 3-aminopropylsilane-form; they are also able to be separated from solution and redispersed readily.

A further procedure of acidifying the particles renders them ionic and dispersable in water. The particles could be acidified with, for example, hydrochloric acid, sulfuric acid, nitric acid, hydrobromic acid, hydroiodic acid, or acetic acid. In certain embodiments any acid could be used that can quaternize the amine group and produce an ammonium salt.

In an embodiment, the nanoparticles are superparamagnetic Fe₃O₄ surface-coated with an organosilane as described above, for example 3-aminopropyltriethoxy silane.

The magnetic nanoparticles can be initially dispersed in a variety of liquid media to provide a magnetic fluid precursor. In certain embodiments, the dispersed particles result in a colloidal suspension. The precursor liquid medium should be a liquid that is suitable for dissolving the film-forming polymer. For example, the liquid media may be water or an organic liquid such as an alcohol, particularly a polar organic solvent. Illustrative liquid media include, but are not limited to, water, tetrahydrofuran, acetone, an alkane (e.g., hexane), toluene, an alkanol (e.g., methanol, ethanol, propanol, etc.), methylene chloride, and methylethyl ketone. Preferred are polar solvents such as water, tetrahydrofuran, methanol, ethanol, and methylene chloride that are also solvents for the film-forming polymer.

The film-forming polymer may be any polymer that is compatible with the magnetic nanoparticles and that can form a temporary film on the surface of the plastic item. The film-forming polymer may be soluble in the liquid medium that constitutes the external phase of the magnetic particle suspension. Illustrative film-forming polymers include polyacrylic acid, polymethacrylic acid, polyalkylene oxide (e.g., polyethylene glycol, polyethylene oxide, or polyoxyethylene), polyvinyl alcohol, polyvinyl-pyrrolidone, cellulose-derived polymers (e.g., hydroxypropylmethyl cellulose, hydroxyethyl cellulose, hydroxypropyl cellulose, carboxymethyl cellulose), carboxylvinyl copolymer, or mixtures or combinations thereof. The polymer may be polyvinyl-pyrrolidone.

The concentration of magnetic nanoparticles in the liquid film-forming polymer medium should be sufficient to enable sufficient magnetic attraction and provide a viscosity that enables spraying of the composition onto the soft plastic or fiberboard pieces.

In certain embodiments, the suspensions exhibit extended shelf life stability. The nanoparticles have a size, and are present in such concentration, that they remain suspended or dispersed in a liquid external phase (without agitation), rather than settling under the influence of gravity. For example, the suspensions may exhibit no or only minimal precipitation for at least 365 days, more particularly at least 180 days, and most particularly at least 90 days.

The composition may be applied to the entire surface or only a portion of the surface of a plastic and/or fiberboard piece. The composition may temporarily adhere to, or coat, the surface and dry quickly. The coated or spotted surface area should be sufficient to physically separate the soft plastic piece from the waste stream when subjected to a magnetic field. The amount of composition applied to the plastic piece may vary.

After collection of the separated plastic and/or fiberboard pieces, the coating composition may be removed (e.g., by dissolving and cleaning off) prior to recycling or combusting the plastic. The magnetic nanoparticles then can be recycled.

The strength of the applied magnetic field may be sufficient to physically separate the coated plastic and/or fiberboard pieces from the waste stream.

A solid waste stream in whole pieces, or previously size reduced, containing soft plastic and/or fiberboard pieces is introduced into a separator system that includes a magnetic field generating component. The magnetic field generating components may be a permanent magnet, an electromagnet or a combination thereof. Preferably, the solid waste stream on a conveyor line continuously passes through the magnetic field, but batch processing is also possible. The separated plastic and/or fiberboard pieces may be collected for further processing by moving the electromagnet away from the conveyor line and to a hopper into which the plastic and/or fiberboard pieces are dropped, or onto another means for conveyance. The separated plastic and/or fiberboard pieces may be removed from the magnetic field by turning off the electromagnet. In certain embodiments the magnet body may be surrounded by a belt conveyance. The plastic and/or fiberboard pieces are held to the surface of the belt conveyance by the magnetic field. The belt conveyance moves the plastic and/or fiberboard pieces out of the influence of the magnetic field and allows the plastic and/or fiberboard pieces to drop into a hopper or onto another conveyance.

The separator system includes means for applying the magnetic nanoparticle/polymer composition to the soft plastic and/or fiberboard pieces. For example, the system may include a sprayer for spraying the composition onto the surfaces of the soft plastic and/or fiberboard pieces.

The separator system also may include means for detecting the soft plastic and/or fiberboard pieces. The soft plastic and/or fiberboard pieces may be manually detected by human visualization. Preferably, the soft plastic and/or fiberboard pieces may be automatically detected, for example, by an infrared optical scanning system.

Embodiments of the invention are described in the following clauses:
1. A method comprising:
   applying a magnetic nanoparticle/polymer suspension to at least a portion of a surface of plastic pieces, or to at least a portion of a surface of fiberboard pieces, in a mixed solid waste stream; and
   subjecting the magnetic nanoparticle/polymer suspension-coated plastic or fiberboard pieces to a magnetic field to separate the magnetic nanoparticle/polymer suspension-coated plastic or fiberboard pieces from the mixed solid waste stream.
2. The method of clause 1, wherein the magnetic nanoparticles are superparamagnetic nanoparticles.
3. The method of clause 1 or clause 2, particularly of clause 1, wherein the magnetic nanoparticles have an average particle size of 5 to 25 nm.
4. The method of any preceding clause and particularly of clause 1, wherein the magnetic nanoparticles comprise chromium (III), cobalt (II), copper (II), dysprosium (III), erbium (III), gadolinium (III), holmium (III), iron (III), iron (II), manganese (II), manganese (III), nickel (II), neodymium (III), praseodymium (III), samarium (III), terbium (III), ytterbium (III), or an alloy or oxide thereof.
5. The method of any preceding clause and particularly of clause 1, wherein the magnetic nanoparticles comprise Fe₃O₄.
6. The method of any preceding clause and particularly of clause 1, wherein the magnetic nanoparticles comprise a surface coating, e.g. are surface coated Fe₃O₄ nanoparticles.
7. The method of clause 6, wherein the surface coating comprises a functional group or ligand selected from hydroxyl, alkyl, alkenyl, silyl, siloxy, amino, or a mixture or combination thereof.
8. The method of clause 6 or clause 7, particularly clause 6, wherein the surface coating is derived from treating the magnetic nanoparticles with a surface modifying agent selected from a saturated or unsaturated carboxylic acid; a silane; a siloxane; or a mixture or combination thereof.
9. The method of clause 8, wherein the surface modifying agent comprises, or is, a silane; in particular the surface modifying agent comprises a silane.
10. The method of any of clauses 1 to 3 and particularly of clause 1, wherein the magnetic nanoparticles comprise iron(II,III) oxide-ammoniumpropylsilane chloride.
11. The method of any preceding clause and particularly of clause 1, wherein the polymer of the magnetic nanoparticle/polymer suspension comprises, or is, polyacrylic acid, polymethacrylic acid, polyalkylene oxide, polyvinyl alcohol, polyvinyl-pyrrolidone, cellulose-derived polymers, carboxylvinyl copolymer, or a mixture or combination thereof; in particular the polymer of the magnetic nanoparticle/polymer suspension comprises polyacrylic acid, polymethacrylic acid, polyalkylene oxide, polyvinyl alcohol, polyvinyl-pyrrolidone, cellulose-derived polymers, carboxylvinyl copolymer, or a mixture or combination thereof, in particular wherein the polymer comprises or, especially, is polyvinyl-pyrrolidone, e.g. wherein the magnetic nanoparticles comprise Fe₃O₄ (for example are surface coated Fe₃O₄ nanoparticles) and the polymer comprises polyvinyl-pyrrolidone.
12. The method of any preceding clause and particularly of clause 1, further comprising detecting the plastic or fiberboard pieces prior to applying the magnetic nanoparticle/polymer suspension.
13. The method of any preceding clause and particularly of clause 1, further comprising removing the magnetic nanoparticle/polymer suspension from the separated plastic or fiberboard pieces.
14. The method of any preceding clause and particularly of clause 1, wherein applying the magnetic nanoparticle/polymer suspension comprises spraying the magnetic nanoparticle/polymer suspension onto the plastic or fiberboard pieces.
15. The method of any preceding clause and particularly of clause 1, wherein the magnetic nanoparticle/polymer suspension is applied to plastic pieces, and the plastic pieces are plastic bags.
16. The method of any preceding clause and particularly of clause 1, wherein the mixed solid waste stream is a mixture of paper and plastic bags, and the method comprises separating the plastic bags from the mixture.
17. The method of any of clauses 1 to 14 and particularly of clause 1, wherein the magnetic nanoparticle/polymer suspension is applied to fiberboard pieces, and the fiberboard pieces are corrugated paperboard pieces.
18. The method of any preceding clause and particularly of clause 1, wherein the mixed solid waste stream is a mixture of paper and corrugated paperboard pieces, and the method comprises separating the corrugated paperboard pieces from the mixture.
19. A composition comprising:
   magnetic nanoparticles dispersed in a film-forming polymer solution, wherein the magnetic nanoparticles having an average particle size of 2 to 100 nm, the magnetic nanoparticles are surface modified with a dispersion enhancing agent, the composition has a shelf-life stability of at least 180 days, and the composition is sprayable.
20. The composition of clause 19, wherein the film-forming polymer is selected from polyacrylic acid, polymethacrylic acid, polyalkylene oxide, polyvinyl alcohol, polyvinyl-pyrrolidone, cellulose-derived polymers, carboxylvinyl copolymer, or a mixture or combination thereof.
21. The composition of clause 19 or clause 20, particularly of clause 19, wherein the magnetic nanoparticles are superparamagnetic nanoparticles.
22. The composition of 19, wherein the magnetic nanoparticles comprises Fe₃O₄ and the polymer comprises polyvinyl-pyrrolidone.
23. The composition of any of clauses 19 to 22, particularly of clause 19, wherein magnetic particles comprise a surface coating.
24. The composition of clause 23, wherein the surface coating comprises a functional group or ligand selected from hydroxyl, alkyl, alkenyl, silyl, siloxy, amino, or a mixture or combination thereof.
25. The composition of clause 23, wherein the surface coating is derived from treating the magnetic nanoparticles with a surface modifying agent selected from a saturated or unsaturated carboxylic acid; a silane; a siloxane; or a mixture or combination thereof.
26. The composition of clause 25, wherein the surface modifying agent comprises a silane.
27. The composition of clause 19 or clause 20, particularly of clause 19, wherein the magnetic nanoparticles comprise iron(II,III) oxide-ammoniumpropylsilane chloride.
28. A composition comprising:
   magnetic nanoparticles dispersed in a film-forming polymer solution, wherein the magnetic nanoparticles having an average particle size of 2 to 100 nm, the magnetic nanoparticles are surface modified with a dispersion enhancing agent and the composition is sprayable.
29. The composition of clause 28 wherein the composition has a shelf-life stability of at least 180 days
30. The composition of clause 28 or clause 29, wherein the magnetic nanoparticles are as defined in any of clauses 2 to 5 or 7 to 10, or in a combination thereof permitted by the dependency of the clauses.
30. The composition of clause 28, clause 29 or clause 30 wherein the polymer is as defined in clause 11.

### Examples

### Example 1

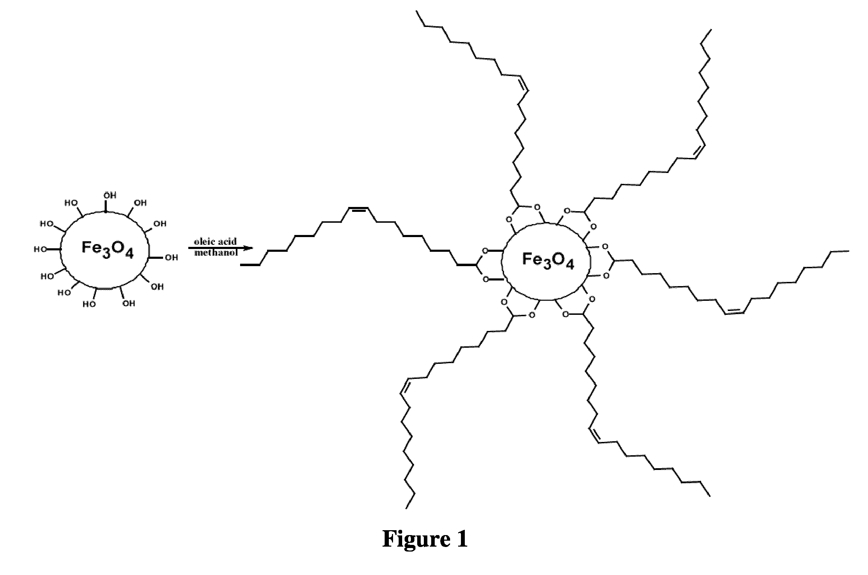

Oil/organic-soluble oleic acid-stabilized Fe₃O₄ nanoparticles were prepared from a mixture of ferrous chloride tetrahydrate (FeCl₂-4H₂O) and ferric chloride hexahydrate (FeCl₃-6H₂O) in water. The resulting nanoparticles were dispersed in methylene chloride and stabilized by reacting the surface hydroxyl-groups with oleic acid (OA) to form Fe₃O₄-OA (see Fig 1, Scheme 1).

In particular, following a variation of a procedure detailed on the internet (chemistry.about.com/od/demonstrationsexperiments/ss/liquidmagnet), oil-soluble oleic acid-stabilized Fe₃O₄ nanoparticles were prepared. Ferrous chloride tetrahydrate (FeCl₂-4H₂O) (2.98g, 0.015mol) and Ferric chloride hexahydrate (FeCl₃-6H₂O) (8.109g, 0.03mol) were dissolved in 30mL deionized water. In a 250mL 3-neck round bottom flask with a glass stoppers and two rubber septa 50mL concentrated (30%) ammonium hydroxide was added to 100mL deionized water. The solution was deoxygenated for 30 minutes by a stream of nitrogen fed in through a needle. The solution of ferrous chloride and ferric chloride was taken up into a syringe and added dropwise to the ammonium chloride solution with constant swirling by hand. Immediate formation of a black solution was observed. After complete addition of the iron solution, the reaction mixture was swirled for 1 minute. The magnetic Fe₃O₄ nanoparticles were separated from the reaction solution by holding a 1.2 tesla magnet to the bottom of the flask and decanting the remaining clear, colorless solution. The resulting wet slurry of Fe₃O₄ nanoparticles was washed with ethanol (100mL) and collected 3 times using magnetic separation. The resulting nanoparticles were dispersed in methylene chloride and stabilized by reacting the surface hydroxyl-groups with oleic acid (OA) to form Fe₃O₄-OA (Scheme 1).

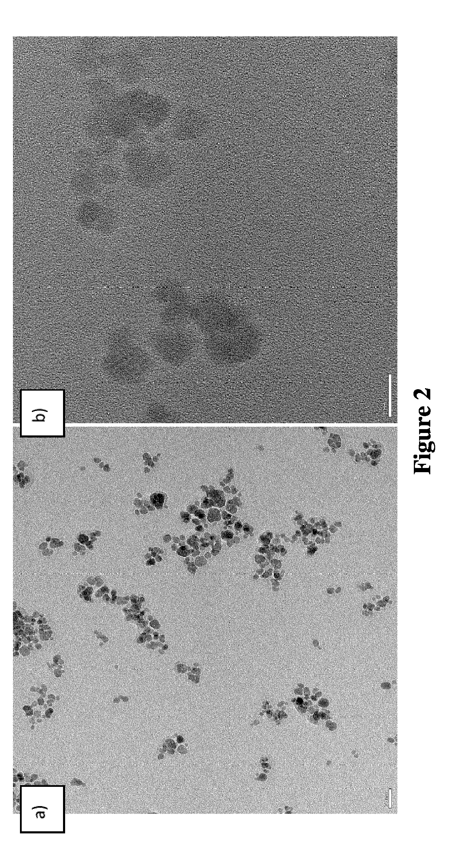

The resulting surface-coated particles were extremely well dispersed and did not sediment after standing for >2 weeks in solution in hexane. When concentrated sufficiently, the entire solution responded to a magnetic field and moved along with a magnet. This experiment demonstrated that super-paramagnetic nanoparticles with superior properties can be produced by a simple method using cheap and readily available starting materials. TEM was used to analyze the particle size, size distribution, and extent of aggregation of the obtained nanoparticles. Figure 2 shows representative images of nanoparticles produced by this procedure. It is clear from the images that the material consists of well-dispersed and aggregate-free nanoparticles with a relatively narrow size distribution. Particles in Figure 2 a) show a subtle halo corresponding to the oleic acid ligand coating. Although particles appear to clump together, there is no evidence of larger aggregate formation. The oleic acid ligand protects the surface of the particles and prevents the fusing of primary particles into aggregates. Figure 2 b) shows a high-resolution magnification of the particles with visible crystalline planes.

### Example 2

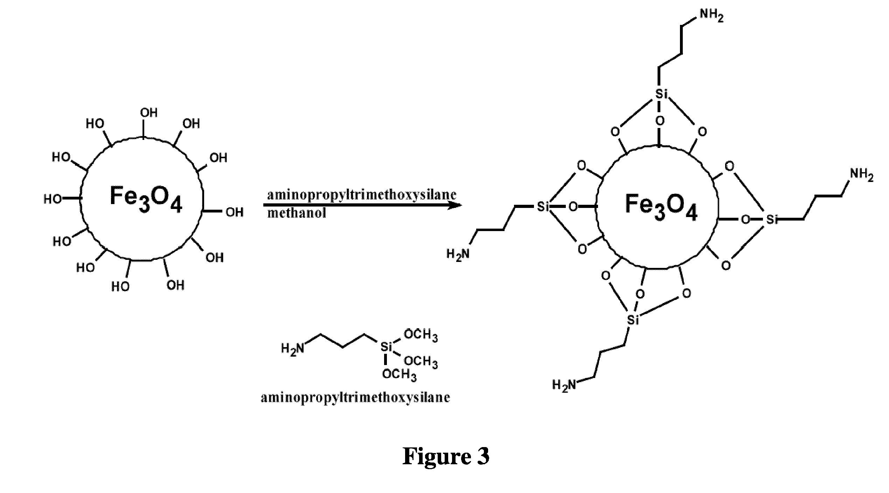

Following in general a procedure described in McCarthy et al, Nature Protocols, 7(9) 1667-93 (2012), alcohol and organic-soluble magnetic aminopropylsilane-capped Fe₃O₄ nanoparticles were prepared from ferrous chloride tetrahydrate (FeCl₂-4H₂O) and ferric chloride hexahydrate (FeCl₃-6H₂O)(Fig 3; Scheme 2). The nanoparticles were then capped with an aminopropylsilane.

In particular, alcohol and organic-soluble magnetic aminopropylsilane-capped Fe₃O₄ nanoparticles were prepared. Sodium hydroxide (5.01g, 0.1253mol) was placed in a 3-neck 500mL round bottom flask equipped with an overhead mechanical stirring device, a 60mL addition funnel, and a rubber septum and dissolved in 250mL deionized water to make a 0.5M solution. The NaOH solution was deoxygenated by a stream of nitrogen while warming to 40°C in an oil bath. Concentrated (12M) hydrochloric acid (0.83mL; 0.00984mol) was added to 25mL deionized water to make a 0.4M solution and deoxygenated by a stream of nitrogen for 30 minutes. Ferrous chloride tetrahydrate (FeCl₂-4H₂O) (2.49g, 0.012mol) and Ferric chloride hexahydrate (FeCl₃-6H₂O) (6.58g, 0.024mol) were added to the HCl solution, stirred until completely dissolved and added to the addition funnel of the reaction vessel. The iron chloride solution was added slowly dropwise into the rapidly stirred NaOH solution. Immediate formation of a black solution was observed indicating the formation of Fe₃O₄. After complete addition, the reaction solution was heated to 80°C and stirred for 1 hour. The product was separated from the reaction solution by holding a 1.2 tesla magnet to the bottom of the flask and decanting the clear, colorless solution. The resulting wet slurry of Fe₃O₄ nanoparticles was washed with ethanol and collected 3 times using magnetic separation. The nanoparticles were diluted to 1g Fe₃O₄ in 250mL ethanol and sonicated for 1 hour followed by addition of 3-aminopropyltrimethoxysilane (6mL; 6.162g, 0.034mol). The mixture was sonicated for an additional 1 hour followed by separation from the reaction solution by holding a 1.2 tesla magnet to the bottom of the flask and decanting the clear, colorless solution. The resulting wet slurry of Fe₃O₄-APS nanoparticles was washed with ethanol and collected 3 times using magnetic separation. The nanoparticles were stored suspended in ethanol until used.

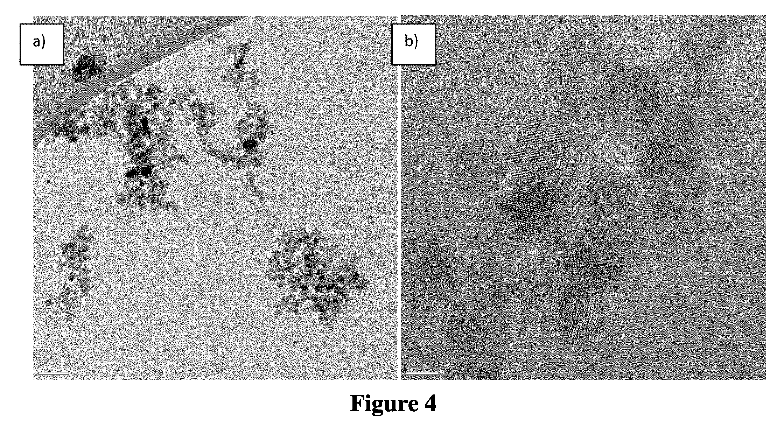

TEM analysis was performed in order to determine the quality of the nanoparticles produced by this procedure. Figure 4 shows TEM images of the resulting nanoparticles. Similarly to the earlier synthesized materials, there is no evidence of aggregation. Also the particle size distribution is more narrow than found from the process of Example 1. A high-resolution image (Figure 4 b) shows very well ordered crystalline planes. More uniform nanoparticles are obtained by this process because the temperature, stirring, and rate of addition of starting compounds are carefully controlled in the synthesis.

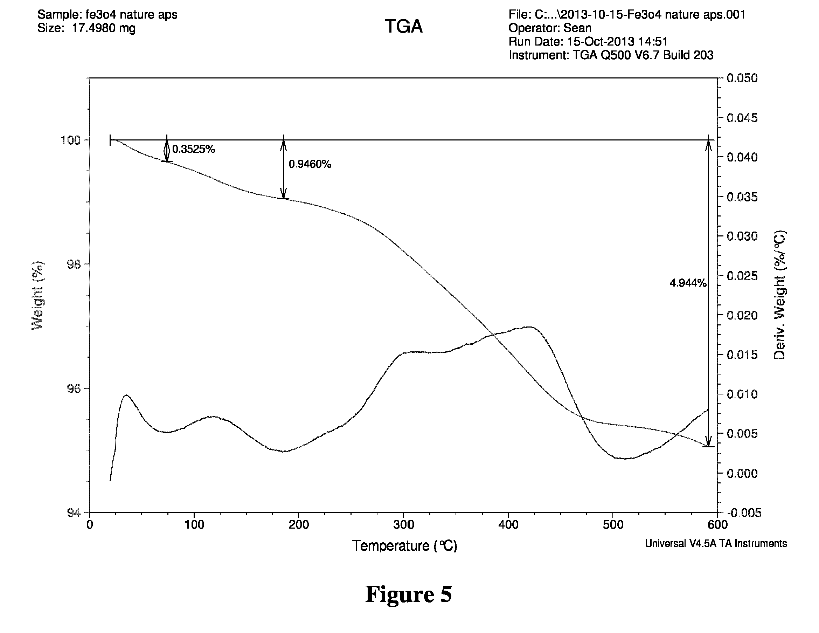

Characterization of the obtained nanoparticles by thermogravimetric analysis (TGA) provided information pertaining to the degradation temperatures of the 3-aminopropylsilane-capped nanoparticles as well as the amount of organic capping agent bound to the surface. Figure 5 shows the TGA data obtained by heating Fe₃O₄-APS nanoparticles to 600°C at a rate of 20°C/min. Between ∼300°C - 450°C, a major weight loss event occurs corresponding to decomposition of the 3-aminopropylsilane capping agent. Weight loss up to 600°C corresponds to only ∼5% indicating that the obtained nanoparticles contain a very small percentage of capping molecules. This is quite advantageous since their contribution to the nanoparticle weight is extremely small. Even at 600°C, there appears to be a small amount of continued weight loss indicating that the obtained nanoparticles are quite stable to even extremely high temperatures.

### Example 3 - Procedure for making water-soluble iron(II,III) oxide-ammoniumpropylsilane chloride (Fe₃O₄-APS·HCl)

The Fe₃O₄-APS nanoparticles are soluble in many common solvents including methanol, ethanol, tetrahydrofuran (THF), and methylene chloride. A further procedure of acidifying the particles renders them ionic and dispersable in water.

Previously synthesized iron(II,III) oxide-aminopropylsilane Fe₃O₄-APS nanoparticles (∼3g) stored as a dispersion in ethanol (150mL) were precipitated by magnetic separation using a 1.2 tesla magnet and washed with 200mL water 3 times. Concentrated HCl (0.1mL; excess) was added to the aqueous suspension and the mixture was placed in an ultrasonic bath for 1 hour. Magnetic separation followed by washing with deionized water was performed 3 times to remove the excess HCl. The resulting Fe₃O₄-APS·HCl were dispersed in 150mL deionized water and sonicated for an additional hour. The nanoparticles were stored as an aqueous dispersion for further experimentation.

### Example 4

In order to test a compatible polymer formulation for a magnetic coating, a common solvent was necessary for both the nanoparticles and the film-forming polymer binder. The solubility of several polymers was tested in ethanol due to its ability to disperse the APS-capped nanoparticles for extended lengths of time. Of the initially chosen polymers (polyethylene glycol, polyvinyl alcohol, and polyvinyl-pyrrolidone), only polyvinyl-pyrrolidone was sufficiently soluble in ethanol or methanol to be tested. Initial solubility tests indicated that 10wt/v% PVP was easily dissolved in ethanol to yield a low viscosity fluid. The low viscosity led to doubling the PVP concentration to 20wt/v% in order to prevent the deposited suspension from spreading too easily. Mixing of the magnetic nanoparticles yielded an extremely stable suspension which was not readily separated by a 1.2 tesla magnet (nominal magnetic strength). This indicated that PVP further stabilizes the nanoparticle suspension. The nanoparticle suspension showed high responsiveness to a magnetic field and was strongly attracted to the magnet at a distance of up to 1 inch. Upon inverting the suspension while holding a magnet to the bottom the vial, half of the volume (5mL) remained suspended upside down by the magnet.

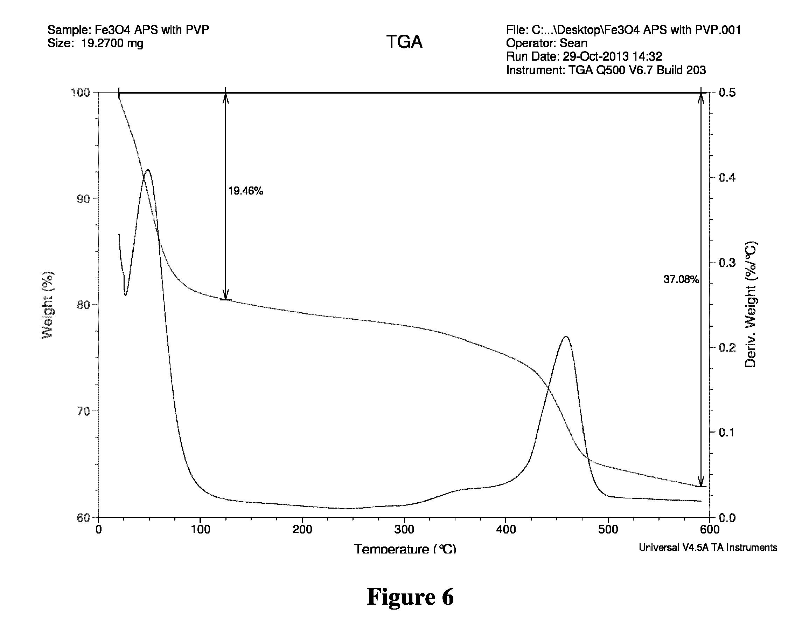

TGA was used to determine the amount of Fe₃O₄ nanoparticles in the solution. An aliquot of the magnetic ink (0.1mL) was deposited into a TGA pan and evaporated to dryness on an 80°C hotplate. The resulting solid was heating to 600°C at a rate of 20°C/minute in the TGA. Figure 6 shows the resulting TGA data for the Fe₃O₄-APS/PVP magnetic ink. The initial weight loss up to ∼100°C (first plateau) is due to residual ethanol and water. Weight loss between ∼120°C - 600°C corresponds to the decomposition of the PVP polymer combined with decomposition of the APS capping compound. At nearly 20% of the total weight loss, this corresponds well with the anticipated amount.

The data obtained from the TGA experiments allows a very accurate quantification of the concentration of nanoparticles in the magnetic nanoparticle suspension. The formulated magnetic nanoparticle suspension that was tested contained Fe₃O₄-APS in a ∼20wt/v% solution of polyvinylpyrrolidone (PVP) (MW=40,000) in ethanol.

A test was conducted to determine the minimum volume of this suspension necessary to lift a zip-top bag weight ∼5g. The suspension was deposited in 0.1mL (100µL) and allowed to dry to a film before testing to see if sufficient magnetic strength was obtained to lift the bag with the 1.2 tesla (nominal) magnet. Using this formulation a volume of magnetic nanoparticle suspension corresponding to approximately 30mg of Fe₃O₄ was necessary to lift the bag to the magnet. This quantity (∼30mg) is half the amount of dry commercial nanoparticles needed (60mg) to lift an equivalent 5000mg(5g) bag. This is consistent with the idea that well dispersed, uniform nanoparticles have better magnetic properties.

In view of the many possible embodiments to which the principles of the disclosed compositions, processes and systems may be applied, it should be recognized that the illustrated embodiments are only examples of the invention and should not be taken as limiting the scope of the invention.

## Claims

1. A method comprising:
applying a magnetic nanoparticle/polymer suspension to at least a portion of a surface of plastic pieces, or to at least a portion of a surface of fiberboard pieces, in a mixed solid waste stream; and
subjecting the magnetic nanoparticle/polymer suspension-coated plastic or fiberboard pieces to a magnetic field to separate the magnetic nanoparticle/polymer suspension-coated plastic or fiberboard pieces from the mixed solid waste stream.

2. The method of claim 1, wherein the magnetic nanoparticles are superparamagnetic nanoparticles.

3. The method of claim 1 or 2, wherein the magnetic nanoparticles have an average particle size of 5 to 25 nm.

4. The method of any one of claims 1 to 3, wherein the magnetic nanoparticles comprise chromium (III), cobalt (II), copper (II), dysprosium (III), erbium (III), gadolinium (III), holmium (III), iron (III), iron (II), manganese (II), manganese (III), nickel (II), neodymium (III), praseodymium (III), samarium (III), terbium (III), ytterbium (III), or an alloy or oxide thereof.

5. The method of any one of claims 1 to 3, wherein the magnetic nanoparticles comprise Fe₃O₄.

6. The method of any one of claims 1 to 5, wherein the magnetic nanoparticles comprise a surface coating.

7. The method of claim 6, wherein the surface coating comprises a functional group or ligand selected from hydroxyl, alkyl, alkenyl, silyl, siloxy, amino, or a mixture or combination thereof.

8. The method of claim 6 or claim 7, wherein the surface coating is derived from treating the magnetic nanoparticles with a surface modifying agent selected from a saturated or unsaturated carboxylic acid; a silane; a siloxane; or a mixture or combination thereof.

9. The method of claim 8, wherein the surface modifying agent comprises a silane.

10. The method of any of claims 1 to 3, wherein the magnetic nanoparticles comprise iron(II,III) oxide-ammoniumpropylsilane chloride.

11. The method of any one of claims 1 to 10, wherein the polymer of the magnetic nanoparticle/polymer suspension comprises polyacrylic acid, polymethacrylic acid, polyalkylene oxide, polyvinyl alcohol, polyvinyl-pyrrolidone, cellulose-derived polymers, carboxylvinyl copolymer, or a mixture or combination thereof.

12. The method of any one of claims 1 to 11, wherein applying the magnetic nanoparticle/polymer suspension comprises spraying the magnetic nanoparticle/polymer suspension onto the plastic or fiberboard pieces.

13. The method of any one of claims 1 to 12, wherein:
the magnetic nanoparticle/polymer suspension is applied to plastic pieces, and the plastic pieces are plastic bags; or
the magnetic nanoparticle/polymer suspension is applied to fiberboard pieces, and the fiberboard pieces are corrugated paperboard pieces.

14. A composition comprising:
magnetic nanoparticles dispersed in a film-forming polymer solution, wherein the magnetic nanoparticles having an average particle size of 2 to 100 nm, the magnetic nanoparticles are surface modified with a dispersion enhancing agent and the composition is sprayable.

15. The composition of claim 14, wherein the composition has a shelf-life stability of at least 180 days,

16. The composition of claim 15, wherein:
the magnetic nanoparticles are as defined in any of claims 1 to 5 or in a combination thereof permitted by dependency; and/or
the magnetic nanoparticles are surface-modified by a coating as defined in any of claims 7 to 9 or in a combination thereof permitted by dependency; and/or
the film-forming polymer comprises a polymer or mixture or combination thereof as recited in claim 11;
optionally wherein: the film-forming polymer is selected from polyacrylic acid, polymethacrylic acid, polyalkylene oxide, polyvinyl alcohol, polyvinyl-pyrrolidone, cellulose-derived polymers, carboxylvinyl copolymer, or a mixture or combination thereof; the magnetic nanoparticles are superparamagnetic nanoparticles; the magnetic particles comprise a surface coating comprising a functional group or ligand selected from hydroxyl, alkyl, alkenyl, silyl, siloxy, amino, or a mixture or combination thereof.

17. The composition of any of claims 14 to 16, wherein the magnetic nanoparticles comprise iron(II,III) oxide-ammoniumpropylsilane chloride.
